# EUROPÄISCHE PATENTSCHRIFT

(11) **EP 3 433 517 B1**
(45) Veröffentlichungstag und Bekanntmachung des Hinweises auf die Patenterteilung: **15.11.2023**
(21) Anmeldenummer: 17715399.6
(22) Anmeldetag: 29.03.2017
(51) Int. Cl.: F16J 15/52, F16C 11/06

(54) **DICHTUNGSVORRICHTUNG ZUM ABDICHTEN DES KUGELGELENKS EINES ACHSSCHENKELBOLZENS**
SEALING DEVICE FOR SEALING A BALL JOINT OF A STEERING KNUCKLE PIN
DISPOSITIF D'ÉTANCHÉITÉ POUR L'ÉTANCHÉIFICATION DE L'ARTICULATION À ROTULE D'UN PIVOT DE FUSÉE

(30) Priorität: 29.03.2016 DE 102016003781
(43) Veröffentlichungstag der Anmeldung: 30.01.2019
(73) Patentinhaber: Liebherr-Mining Equipment Colmar SAS, 68025 Colmar cedex (FR)
(72) Erfinder: FORESTIER, Cédric, 6800 Colmar (FR); KUGELSTADT, Kai, 77933 Lahr (DE); KUGELSTADT, Kai, 77933 Lahr (DE)
(74) Vertreter: Laufhütte, Dieter
(86) Internationale Anmeldenummer: PCT/EP2017/000386
(87) Internationale Veröffentlichungsnummer: WO 2017/167445

(56) Entgegenhaltungen:
- EP-A1- 0 024 749
- DE-A1- 10 139 564
- DE-B- 1 286 823
- US-A- 5 573 336

## Beschreibung

Die Erfindung betrifft eine Dichtungsvorrichtung zum Abdichten des Kugelgelenks eines Achsschenkelbolzens.

Kugelgelenke werden bei Baumaschinen zur Aufhängung bzw. Kopplung von Lenkungskomponenten verwendet und müssen vor Verschmutzungen geschützt werden, wie sie insbesondere beim Baustellenbetrieb der Baumaschine auftreten können. Hierzu ist es bekannt, Versiegelungen bzw. Abdeckungen bereitzustellen, mittels derer der Kontaktbereich bzw. der Innenbereich des Kugelgelenks, in dem die Gelenkkugel im Gelenktopf bzw. in der Gelenkpfanne gelagert ist, geschützt werden kann. Nachteilig an den aus dem Stand der Technik bekannten Versiegelungen ist, dass diese nur mit hohem Aufwand wechselbar, schmutzanfällig und nicht sehr zuverlässig sind und insbesondere im intensiven Baustellenbetrieb ihre Funktion nicht dauerhaft wahren können.

So offenbart DE 101 39 564 A1 ein Kugelgelenk, insbesondere für Fahrwerksteile von Kraftfahrzeugen, mit einem Gelenkgehäuse, mit mindestens einer Lageraufnahme und einem Gelenkzapfen mit einer in der Lageraufnahme gelagerten Gelenkkugel, sowie einer Abdichtmanschette zwischen Gelenkzapfen und Gehäuse, wobei der Gelenkzapfen aus Stahl und das Gehäuse aus einem Werkstoff mit geringerem E-Modul bestehen. Zur robusteren Konstruktion des Kugelgelenks sind in das Gehäuse Verstärkungen aus einem höherfesten Werkstoff, insbesondere ebenfalls aus Stahl, eingesetzt.

DE 18 63 433 U lehrt einen Dichtungsring zum Abdichten der hin und her gehenden Kolbenstangen in pneumatischen und hydraulischen Arbeitszylindern, der einen an der Kolbenstangenführung zu befestigenden Halterungsteil und an der dem Halterungsteil abgewandten und der Kolbenstange zugekehrten Seite mindestens ein sich lippenartig an die Kolbenstange anschmiegendes Ringelement zum Abdichten des Spaltes zwischen der Kolbenstangenführung und der Kolbenstange sowie einen Abstreifring besitzt, der beim Hin- und Hergehen der Kolbenstange an dieser haftende Fremdkörper abstreift.

Eine Dichtung für ein Gelenklager offenbart US 5 573 336 A. Hier weist ein ringförmiges metallisches Stützelement eine zylindrische Oberfläche auf, die in einer Bohrung des Außenrings oder Lagergehäuses des Gelenklagers derart montierbar ist, dass eine konische Oberfläche des metallischen Stützelements über dem kugelförmigen Element liegt. Eine ringförmige elastomere Dichtungslippe ist an der konischen Oberfläche des metallischen Trägerelements und ein elastomerer Dichtungskörper an der konischen Oberfläche des metallischen Trägerelements axial innerhalb der elastomeren Dichtungslippe angebracht, so dass die elastomere Dichtungslippe und das elastomere Element Dichtungskörper das kugelförmige Element kontaktieren. Der elastomere Dichtungskörper kann Nuten aufweisen, um der elastomeren Dichtungslippe Schmiermittel zuzuführen.

Vor diesem Hintergrund ist es Aufgabe der Erfindung, einen entsprechenden Schutz zum Abdichten des Kugelgelenks bereitzustellen, der das Eindringen von Schmutz effektiv verhindert, Schmutzansammlungen im Bereich des Kugelgelenks vorbeugt, das begrenzte Austreten von Schmierflüssigkeit zum Zwecke der Selbstreinigung des Kugelgelenks ermöglicht, leicht ist und einfach montiert werden kann.

Diese Aufgabe wird erfindungsgemäß durch eine Dichtungsvorrichtung z.B. zum Abdichten des Kugelgelenks eines Achsschenkelbolzens mit den Merkmalen des Anspruchs 1 gelöst. Vorteilhafte Ausbildungen sind Gegenstand der Unteransprüche.

Demnach ist eine Dichtungsvorrichtung mit wenigsten einem Haltering und wenigstens einem Dichtungsring vorgesehen, wobei der Dichtungsring wenigstens teilweise innerhalb einer Nut des Halterings vorgesehen ist und wobei die Nut in einem radial innenliegenden Bereich des Halterings vorgesehen ist und wobei die Nut weiterhin wenigstens zwei insbesondere zueinander parallel ausgerichtete erste innere Kegelstumpfbereiche umfasst, wobei der Dichtungsring entsprechend angeordnete äußere Kefelstumpfbereiche umfasst. Erfindungsgemäß ist der Haltering mehrstückig ausgeführt und die mehreren Stücke des Halterings sind so ausgebildet, dass es möglich ist, den Haltering nach der Montage der Gelenkkugel in der Gelenkpfanne zu verbauen.

Damit wird statt einer außenliegenden Versiegelung bzw. Abdichtung eine effektive Abstreifvorrichtung innerhalb eines Halterings des Kugelgelenks bereitgestellt. Die Abstreifvorrichtung ist dazu ausgebildet das Eindringen von Schmutz in das Kugelgelenk zu verhindern und gleichzeitig ein begrenztes Austreten von Schmierflüssigkeit aus dem Kugelgelenk nach außen zu ermöglichen, wodurch ein Auswaschen von Schmutzpartikeln aus dem Kugelgelenk bewirkt wird.

Vorteilhafterweise wird so eine Vorrichtung bereitgestellt, welche leichter und kleiner als aus dem Stand der Technik bekannte Schutzvorrichtungen ist und die darüber hinaus einfacher zu montieren ist. Die erfindungsgemäße Vorrichtung ist ferher innerhalb des Halterings gelagert, so dass sie vorteilhaft besser vor Beschädigungen und Verschmutzungen geschützt ist.

Die Kegelstumpfbereiche von Haltering und Dichtungsring können jeweils gestuft ausgebildet sein, so dass Haltering und Dichtungsring entsprechend gestuft ineinandergreifen, wodurch ein besserer Halt der Bauteile aneinander und eine bessere Abdichtung ermöglicht ist. Wie den Figuren zu entnehmen ist, kann der die Nut umfassende radial innenliegende Bereich des Halterings nahe des radial innersten Bereichs des Halterings verortet sein.

In einer weiteren Ausführung ist denkbar, dass die ersten inneren Kegelstumpfbereiche des Halterings von wenigstens zwei zu den ersten inneren Kegelstumpfbereichen insbesondere parallel ausgerichteten zweiten inneren Kegelstumpfbereichen eingefasst sind. Erfindungsgemäß ist der Haltering zweistückig ausgebildet.

Die zweiten inneren Kegelstumpfbereiche des Halterings fassen dabei den Dichtungsring im zusammengebauten Zustand der Dichtungsvorrichtung in axialer Richtung innerhalb des Halterings wenigstens teilweise ein bzw. sind gegenüber der Kugelfläche des Kugelgelenks im Wesentlichen parallel angeordnet und umschlie-βen damit wenigstens teilweise gemeinsam mit der Kugel des Kugelgelenks den innerhalb der Nut vorliegenden ringförmigen Aufnahmeraum für den Dichtungsring. Der Dichtungsring kann dadurch besser in Position gehalten werden, wodurch wiederum eine bessere Abdichtung ermöglicht ist.

In einer weiteren bevorzugten Ausführungsform ist denkbar, dass der Dichtungsring eine insbesondere parallel zu seinem äußeren Kegelstumpfbereichen ausgerichtete Dichtungslippe umfasst. Die Dichtungslippe kann mit der Kugelfläche des Kugelgelenks über einen Kontaktbereich in Kontakt stehen und so eine Dichtwirkung zwischen dem Innenraum des Kugelgelenks und der Umgebung erzielen. Die Dichtungslippe kann dabei auch wenigstens teilweise gekrümmt ausgebildet sein und/oder in einem Winkel zu den äußeren Kegelstumpfbereichen des Dichtungsrings angeordnet sein. Hierdurch kann der Kontaktbereich der Dichtungslippe besser an die Kugelfläche der Gelenkkugel angepasst sein, wodurch unter anderem eine geringere Biegung der Dichtungslippe und damit deren erhöhte Lebensdauer bewirkt werden.

In einer weiteren bevorzugten Ausführung ist denkbar, dass die Kegelstumpfbereiche in einem Winkel von 90° bis 140 °, insbesondere von 105° bis 125 ° und besonders bevorzugt von 115° bis ± 5 ° zu einem Grundbereich des Halterings bzw. zu einem Grundbereich des Dichtungsrings angeordnet sind. Hierdurch kann die Dichtungsvorrichtung mit ihrem Dichtungsring bzw. der Dichtungslippe annähernd parallel an einen entsprechenden Bereich der Kugel des Kugelgelenks angelegt werden, wodurch die Wirksamkeit der Dichtung erhöht werden kann.

In einer weiteren bevorzugten Ausführung ist denkbar, dass der Haltering mit einer Gelenkpfanne koppelbar ist, wobei in dem Grundbereich des Halterings Durchführungen zum Koppeln des Halterings mit der Gelenkpfanne vorgesehen sind, und/oder wobei am Grundbereich des Halterings ein wenigstens teilweise zylindermantelförmiger und/oder wenigstens teilweise kegelstumpfförmiger Anschlag insbesondere zum Zentrieren des Halterings an der Gelenkpfanne vorgesehen ist.

Ferner betrifft die Erfindung eine Radaufhängung für eine Großbaumaschine, insbesondere für einen Muldenkipper, mit wenigstens einer Dichtungsvorrichtung nach einem der Ansprüche 1 bis 5 sowie eine entsprechend ausgestattete Großbaumaschine.

Weitere Einzelheiten und Vorteile sind anhand einer in den Figuren beispielhaft gezeigten Ausführung der Erfindung erläutert. Dabei zeigen:
- Figur 1a:: Eine Radaufhängung mit erfindungsgemäß abgedichtetem Achsschenkelbolzen;
- Figur 1b:: Eine Schnittansicht eines Kugelgelenks einer Radaufhängung mit einem erfindungsgemäß abgedichtetem Achsschenkelbolzen;
- Figur 1c:: Eine Detailansicht der erfindungsgemäßen Dichtungsvorrichtung in Schnittansicht;
- Figuren 2a-e:: Verschiedene Ansichten eines erfindungsgemäßen Halterings; und
- Figuren 3a-e:: Verschiedene Ansichten eines erfindungsgemäßen Dichtungsrings.

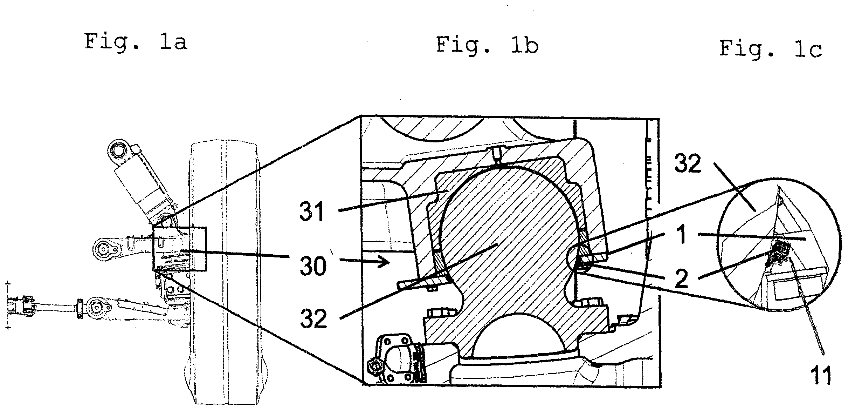

Gemäß Figur 1a umfasst die daran gezeigte Radaufhängung wenigstens ein Kugelgelenk 30, mittels dem ein Rad beispielsweise einer Baumaschine mittelbar mit der Baumaschine über mehrere Freiheitsgrade schwenkbar gekoppelt ist. Wie Figur 1b zu entnehmen ist, fasst der Haltering 1 samt dem Dichtungsring 2 die Kugel 32 des Kugelgelenks 30 in der Gelenkpfanne 31 ein, wobei die Kugel 32 zwar rotieren kann, der Kugelgelenkinnenraum jedoch durch den Dichtungsring 2 abgedichtet ist.

Wie Figur 1c zu entnehmen ist, erstreckt sich der Dichtungsring 2 dabei innerhalb einer Nut 11 des Halterings, wobei die Nut 11 in einem radial innenliegenden Bereich des Halterings 1 vorgesehen ist. Die im Folgenden näher erläuterte Dichtungslippe 24 des Dichtungsrings 2 kann in Richtung nach außerhalb des Kugelgelenks 30 bzw. von der Gelenkpfanne 31 weg orientiert sein. Das Innere des Kugelgelenks 30 kann dabei als der von Gelenkpfanne 31 und dem Haltering 1 umgrenzter Bereich angenommen werden.

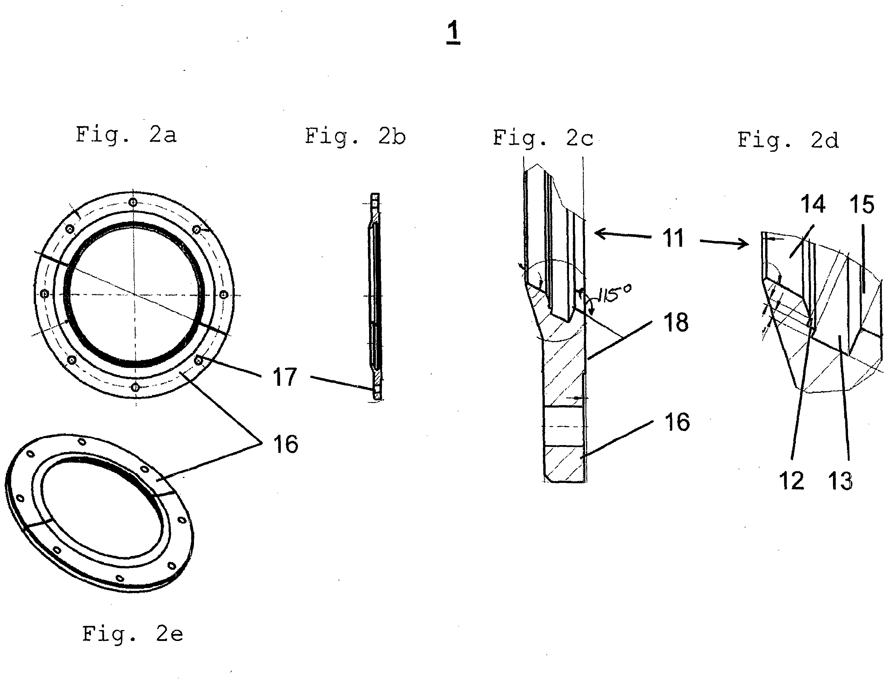

Figuren 2a bis 2e zeigen unterschiedliche Ansichten des Halterings 1, wobei Figur 2a eine Draufsicht des Halterings 1 ist, in der der Haltering 1 einen kreisförmigen Querschnitt aufweist. Figur 2b ist eine seitliche Schnittansicht des Halterings 1, während Figuren 2c und 2d Detailansichten der Nut 11 des Halterings 1 sind. Figur 2e zeigt eine perspektivische Ansicht des Halterings 1.

Der radial außen liegende Bereich des Halterings 1 bildet einen Grundbereich 16 des Halterings 1. Wie Figur 2a zu entnehmen ist, ist der Haltering 1 zweistückig ausgebildet, wodurch das Anbringen des Halterings 1 an der Gelenkpfanne ermöglicht bzw. vereinfacht wird. Der Haltering 1 kann aus zwei identischen bzw. symmetrischen Hälften ausgebildet sein. Hierdurch kann die Herstellung des Halterings 1 vereinfacht werden, da nicht unterschiedliche Komponenten bereitgestellt werden müsse.

Insbesondere ist es möglich den Haltering 1 nach der Montage der Kugel 32 in die Gelenkpfannen 31 mit dem Kugelgelenk 30 zu verbauen. Dies ermöglicht es auch vorteilhaft den Haltering 1 bzw. den Dichtungsring 2 auszuwechseln ohne dabei das Kugelgelenk 30 komplett demontieren zu müssen.

Wie Figuren 2a und 2b zu entnehmen ist, können an dem Haltering 1 Durchführungen 17 vorgesehen sein, welche an dem Grundbereich 16 des Halterings 1 vorgesehen sein können. Die Durchführungen 17 können dafür vorgesehen sein Feststellmittel wie Schrauben aufzunehmen, mittels derer die Vorrichtung bzw. der Haltering 1 mit der Gelenkpfanne 31 oder mit anderen Strukturen des Kugelgelenks 30 koppelbar ist. Hierzu können in der Gelenkpfanne 31 entsprechende Gewindebohrungen, Durchführungen oder ähnliches vorgesehen sein, die zum Fixieren der Feststellmittel ausgebildet sein können. Es können dabei beispielsweise je vier Durchführungen 17 an einer Hälfte des Halterings 1 vorgesehen sein. Ferner kann, wie Figur 2c entnehmbar ist, am Haltering 1 ein zylindermantelförmiger und/oder kegelstumpfförmiger Anschlag 18 zum Zentrieren des Halterings 1 an der Gelenkpfanne 31 vorgesehen sein.

Figuren 2c und 2d zeigen die beiden insbesondere parallel zueinander ausgerichteten ersten inneren Kegelstumpfbereiche 12, 13 des Halterings 1, in denen der Dichtungsring 2 mit seinen dazu passenden äußeren Kegelstumpfbereichen 22, 23 anordenbar ist. Die Kegelstumpfbereiche 12, 13 können Teil der Nut 11 des Halterings 1 sein. Die einzelnen Kegelstumpfbereiche 12, 13, 22, 23 können über auf die Kegelstumpfbereiche 12, 13, 22, 23 senkrecht und/oder angewinkelt angeordneten Wandungen verbunden sein. Außerhalb der ersten inneren Kegelstumpfbereiche 12, 13 des Halterings 1 sind fernerhin insbesondere parallel ausgerichtete zweite innere Kegelstumpfbereiche 14, 15 vorgesehen, die ebenfalls über dazu senkrecht und/oder angewinkelt angeordnete Wandungen mit den weiteren Kegelstumpfbereichen 12, 13 verbunden sein können.

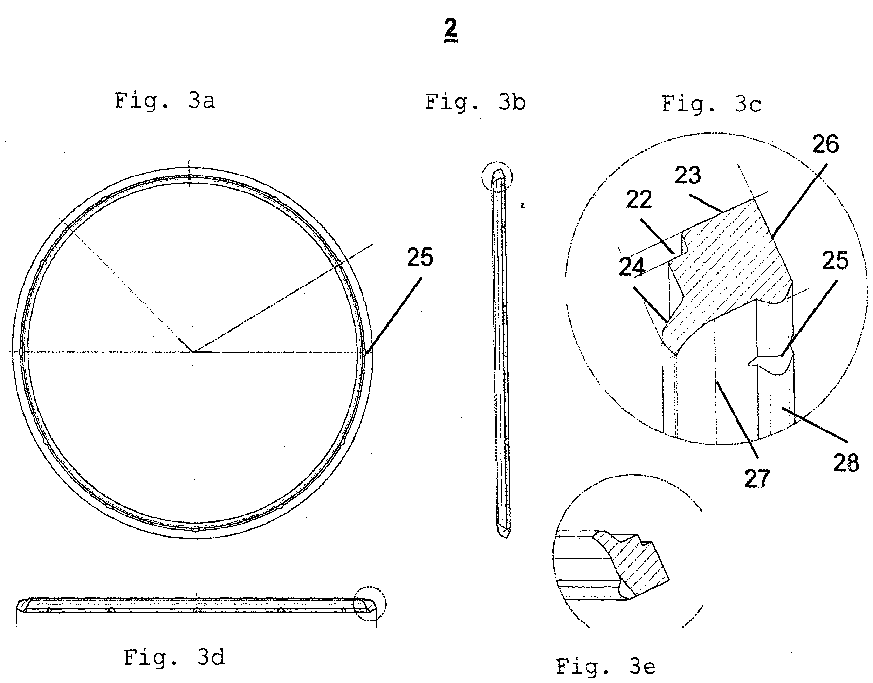

Figuren 2d und 3c zeigen, dass die Kegelstumpfbereiche 12, 13, 14, 15, 22, 23 angewinkelt zu Grundbereichen 16, 26 von Haltering 1 und Dichtungsring 2 angeordnet sind. Dadurch kann der Dichtungsring 2 besser parallel oder im Wesentlichen parallel an einem Abschnitt der Kugel 32 des Kugelgelenks 30 angeordnet werden. Der Grundbereich 16 des Halterings 1 kann dabei als hohlzylinderförmiger Ringabschnitt ausgebildet sein.

Figuren 3a bis 3e zeigen einen Dichtungsring 2 mit einer in den Figuren 3c und 3e deutlich erkennbaren Dichtungslippe 24. Der Dichtungsring 2 weist wenigstens teilweise eine zum Haltering 1 negative Geometrie auf, sodass der Dichtungsring 2 an der entsprechend ausgeformten Nut 11 des Halterings 1 einsetzbar bzw. positionierbar ist und kraft- und/oder formschlüssig mit dem Haltering 1 in Eingriff bringbar ist.

Der Grundbereich 26 des Dichtungsrings 2 kann derjenige Bereich sein, der im montierten Zustand der Dichtungsvorrichtung der Innenseite des Kugelgelenks 30 zugewandt ist. Die Kegelstumpfbereiche 22, 23 des Dichtungsrings 2 können dabei insbesondere rechtwinklig zu dem Grundbereich 26 angeordnet sein.

In den Figuren 3a bis 3d sind Ausnehmungen 25 gezeigt, die in Umfangsrichtung des Dichtungsrings 2 verteilt angeordnet sein können. Diese können ein begrenztes Austreten von Schmiersubstanz aus dem Kugelgelenkinnenraum nach außen ermöglichen. An einem von der Dichtungslippe 24 beabstandeten Bereich des Dichtungsrings 2 kann eine Ausbildung 28 vorgesehen sein, in welcher die Ausnehmungen 25 wenigstens teilweise verlaufen. Die Dichtungslippe 24 und die Ausbildung 28 können so ausgebildet sein, dass sie im montierten Zustand der Dichtungsvorrichtung mit der Kugel 32 des Kugelgelenks 30 in Kontakt sind.

Zwischen der Dichtungslippe 24 und der Ausbildung 28 kann ein Bereich 27 vorgesehen sein, welcher im montierten Zustand der Dichtungsvorrichtung nicht mit der Kugel 32 des Kugelgelenks 30 in Kontakt ist. Dieser Bereich 27 des Dichtungsrings 2 kann konkav ausgebildet sein. Hierdurch wird es vereinfacht, die Dichtungslippe 24 so elastisch bzw. beweglich mit der übrigen Struktur des Dichtungsrings 2 zu verbinden, dass die Dichtungslippe 24 im montierten Zustand der Dichtungsvorrichtung von der Kugel 32 nach außen bzw. weggedrückt wird, wodurch die Dichtungslippe 24 aufgrund ihrer Elastizität auf die Kugel 32 aufdrückt und damit eine Dichtungswirkung erzielt wird.

Der Dichtungsring 2 kann aus einem elastischen Kunststoff gefertigt sein, während der Haltering 1 aus einem Metall gefertigt sein kann. Denkbar sind auch Ausführungen, bei denen beide Komponenten aus Kunststoff gefertigt sind und/oder einstückig ausgebildet sind. Hierbei kann es allerdings erforderlich sein, dass die Kugel 32 des Kugelgelenks 30 durch eine anderweitige Haltevorrichtung innerhalb der Gelenkpfanne 31 gehalten wird.

## Patentansprüche

1. Dichtungsvorrichtung zum Abdichten des Kugelgelenks (30) eines Achsschenkelbolzens, mit wenigstens einem Haltering (1) und wenigstens einem Dichtungsring (2), wobei
das Kugelgelenk (30) eine Gelenkpfanne (31) und eine Gelenkkugel (32) umfasst und
der Dichtungsring (2) wenigstens teilweise innerhalb einer Nut (11) des Halterings (1) vorgesehen ist, wobei die Nut (11) in einem radial innenliegenden Bereich des Halterings (1) vorgesehen ist und wobei die Nut (11) weiterhin wenigstens zwei insbesondere zueinander parallel ausgerichtete erste innere Kegelstumpfbereiche (12, 13) umfasst, wobei der Dichtungsring (2) entsprechend angeordnete äußere Kegelstumpfbereiche (22, 23) umfasst,
**dadurch gekennzeichnet, dass**
der Haltering (1) mehrstückig ausgebildet ist und
die mehreren Stücke des Halterings (1) so ausgebildet sind, dass es möglich ist den Haltering (1) nach der Montage der Gelenkkugel (32) in der Gelenkpfanne (31) zu verbauen.

2. Dichtungsvorrichtung nach Anspruch 1, wobei die ersten inneren Kegelstumpfbereiche (12, 13) des Halterings (1) von wenigstens zwei zu den ersten inneren Kegelstumpfbereichen (12, 13) insbesondere parallel ausgerichteten zweiten inneren Kegelstumpfbereichen (14, 15) eingefasst sind, und/oder dass der Haltering (1) zweistückig ausgebildet ist.

3. Dichtungsvorrichtung nach Anspruch 1 oder 2, wobei der Dichtungsring (2) eine insbesondere parallel zu seinen äußeren Kegelstumpfbereichen (22, 23) ausgerichtete Dichtungslippe (24) umfasst.

4. Dichtungsvorrichtung nach einem der vorhergehenden Ansprüche, wobei die Kegelstumpfbereiche (12, 13, 14, 15, 22, 23) in einem Winkel von 90° - 140°, insbesondere von 105° - 125°, und besonders bevorzugt von 115° ±5° zum Grundbereich (16) des Halterings (1) bzw. zu einem Grundbereich (26) des Dichtungsrings (2) angeordnet sind.

5. Dichtungsvorrichtung nach einem der vorhergehenden Ansprüche, wobei der Haltering (1) mit einer Gelenkpfanne (31) koppelbar ist, wobei in dem Grundbereich (16) des Halterings (1) Durchführungen (17) zum Koppeln des Halterings (1) mit der Gelenkpfanne (31) vorgesehen sind, und/oder wobei am Grundbereich (16) des Halterings (1) ein wenigstens teilweise zylindermantelförmiger und/oder wenigstens teilweise kegelstumpfförmiger Anschlag (18) insbesondere zum Zentrieren des Halterings (1) an der Gelenkpfanne (31) vorgesehen ist.

6. Radaufhängung für eine Großbaumaschine, insbesondere einen Muldenkipper, mit wenigstens einer Dichtungsvorrichtung nach einem der Ansprüche 1 bis 5.

7. Großbaumaschine, insbesondere Muldenkipper, mit wenigstens einer Radaufhängung nach Anspruch 6.

## Claims

1. Sealing apparatus for sealing the ball joint (30) of a kingpin, comprising at least one holding ring (1) and at least one seal ring (2), wherein
the ball joint (30) comprises a socket (31) and a joint ball (32), and
the seal ring (2) is provided at least partially within a groove (11) of the holding ring (1), wherein the groove (11) is provided in a radially inwardly disposed region of the holding ring (1) and wherein the groove (11) further comprises at least two first inner truncated cone regions (12, 13) that are in particular aligned in parallel with one another, wherein the seal ring (2) comprises correspondingly arranged outer truncated cone regions (22, 23),
**characterized in that**
the holding ring (1) is configured in multiple pieces and
the multiple pieces of the holding ring (1) are configured in such a way that it is possible to install the holding ring (1) in the socket (31) after mounting of the joint ball (32).

2. Sealing apparatus in accordance with claim 1, wherein the first inner truncated cone regions (12, 13) of the holding ring (1) are encompassed by at least two second inner truncated cone regions (14, 15) that are in particular aligned in parallel with the first inner truncated cone regions (12, 13); and/or the holding ring (1) is formed in two pieces.

3. Sealing apparatus in accordance with claim 1 or 2, wherein the seal ring (2) comprises a seal lip (24) that is in particular aligned in parallel with its outer truncated cone regions (22, 23).

4. Sealing apparatus in accordance with one of the preceding claims, wherein the truncated cone regions (12, 13, 14, 15, 22, 23) are arranged at an angle of 90° - 140°, in particular of 105° - 125°, and particularly preferably of 115° ± 5°, to the base region (16) of the holding ring (1) or to a base region (25) of the seal ring (2).

5. Sealing apparatus in accordance with one of the preceding claims, wherein the holding ring (1) can be coupled to a socket (31), wherein feed-throughs (17) are provided in the base region (16) of the holding ring (1) to couple the holding ring (1) to the socket (31); and/or wherein an abutment (18) is provided at the base region (16) of the holding ring (1) that is at least partially in cylinder jacket form and/or at least partially in truncated cone form, in particular to center the holding ring (1) at the socket (31).

6. Wheel suspension for a large construction machine, in particular for a dump truck, comprising at least one sealing apparatus in accordance with one of the claims 1 to 5.

7. Large construction machine, in particular a dump truck, having at least one wheel suspension in accordance with claim 6.

## Revendications

1. Dispositif d'étanchéité pour étanchéifier l'articulation à rotule (30) d'un pivot de fusée, avec au moins une bague de retenue (1) et au moins une bague d'étanchéité (2),
l'articulation à rotule (30) comprenant une cavité d'articulation (31) et une rotule d'articulation (32), et
la bague d'étanchéité (2) étant prévue au moins partiellement à l'intérieur d'une rainure (11) de la bague de retenue (1), la rainure (11) étant prévue dans une zone radialement intérieure de la bague de retenue (1) et la rainure (11) comprenant en outre au moins deux premières zones tronconiques intérieures (12, 13), notamment orientées parallèlement l'une à l'autre, la bague d'étanchéité (2) comprenant des zones tronconiques extérieures (22, 23) agencées de manière correspondante,
**caractérisé en ce que**
la bague de retenue (1) est configurée en plusieurs pièces et
les plusieurs pièces de la bague de retenue (1) sont configurées de telle sorte qu'il est possible de monter la bague de retenue (1) dans la cavité d'articulation (31) après le montage de la rotule d'articulation (32).

2. Dispositif d'étanchéité selon la revendication 1, dans lequel les premières zones tronconiques intérieures (12, 13) de la bague de retenue (1) sont bordées d'au moins deux deuxièmes zones tronconiques intérieures (14, 15), notamment orientées parallèlement aux premières zones tronconiques intérieures (12, 13), et/ou la bague de retenue (1) est configurée en deux parties.

3. Dispositif d'étanchéité selon la revendication 1 ou 2, dans lequel la bague d'étanchéité (2) comprend une lèvre d'étanchéité (24), notamment orientée parallèlement à ses zones tronconiques extérieures (22, 23).

4. Dispositif d'étanchéité selon l'une quelconque des revendications précédentes, dans lequel les zones tronconiques (12, 13, 14, 15, 22, 23) sont agencées à un angle de 90° à 140°, notamment de 105° à 125°, et de manière particulièrement préférée de 115° ± 5° par rapport à la zone de base (16) de la bague de retenue (1) ou à une zone de base (26) de la bague d'étanchéité (2).

5. Dispositif d'étanchéité selon l'une quelconque des revendications précédentes, dans lequel la bague de retenue (1) peut être couplée à une cavité d'articulation (31), des passages (17) étant prévus dans la zone de base (16) de la bague de retenue (1) pour coupler la bague de retenue (1) à la cavité d'articulation (31), et/ou une butée (18) au moins partiellement en forme d'enveloppe cylindrique et/ou au moins partiellement de forme tronconique étant prévue sur la zone de base (16) de la bague de retenue (1), notamment pour centrer la bague de retenue (1) sur la cavité d'articulation (31).

6. Suspension de roue pour un engin de chantier, notamment un tombereau, avec au moins un dispositif d'étanchéité selon l'une quelconque des revendications 1 à 5.

7. Engin de chantier, notamment tombereau, avec au moins une suspension de roue selon la revendication 6.
